# EUROPÄISCHE PATENTANMELDUNG

(11) **EP 2 312 417 A1**
(43) Veröffentlichungstag der Anmeldung: **20.04.2011**
(21) Anmeldenummer: 09173294.1
(22) Anmeldetag: 16.10.2009
(51) Int. Cl.: G06F 1/18

(54) **Systemeinheit für die USB-Schnittstelle eines Rechners**

(71) Anmelder: SIEMENS AKTIENGESELLSCHAFT, 80333 München (DE)
(72) Erfinder: Kurrer, Siegfried, 90449 Nürnberg (DE); Reinert, Matthias, 90587 Obermichelbach (DE); Zettwitz, Rolf, 91301 Forchheim (DE)

(57) **Zusammenfassung**

Es wird eine Systemeinheit für einen Rechner vorgeschlagen, welche an einer Wand (3) eine mittels einer Abdeckung (6) verschließbare Vertiefung (2) aufweist, in welcher mindestens eine USB-Schnittstelle (4) mit eingestecktem USB-Stick (5) angeordnet ist. Dadurch, dass zwischen Abdeckung (6) und Wand (3) eine Dichtung (7) vorgesehen ist, wird eine Schutzart im Hinblick auf einen Berührungs- und/oder Fremdkörper- und/oder Wasserschutz verwirklicht.

## Beschreibung

Die Erfindung betrifft eine Systemeinheit für einen Rechner, welche an einer Wand eine mittels einer Abdeckung verschließbare Vertiefung aufweist, in welcher mindestens eine USB-Schnittstelle mit eingestecktem USB-Stick angeordnet ist.

Eine derartige Systemeinheit ist aus der DE 10 2006 053 413 Al bekannt. An diese Systemeinheit sind eine Bedieneingabe-Einheit, z. B. eine Bedieneingabe-Einheit in Form einer Tastatur und/oder einer Maus, sowie mindestens ein Bildwiedergabegerät und sonstige Hardware-Einheiten anschließbar. Ferner ist die Systemeinheit mit weiteren für den Betrieb des Rechners geeigneten Hardwaremitteln versehen, wobei in einer Vertiefung an der Frontseite der Systemeinheit eine USB-Schnittstelle angeordnet ist, in die ein USB-Stick, z. B. ein USB-Stick in Form eines USB-Dongles oder eines USB-Speichers, steckbar ist. Die USB-Schnittstelle ist im Wesentlichen parallel zur Frontseite angeordnet, wodurch für den Fall, dass ein USB-Stick gesteckt ist, die Fronttür der Systemeinheit geschlossen werden kann.

Ein USB-Stick kann zwar so ausgestaltet sein, dass dieser an sich den Erfordernissen einer so genannten IP 65-Schutzklasse (International Protection-Code, Ingress Protection-Code) genügt, allerdings werden gewöhnlich nur die Erfordernisse gemäß Schutzklasse IP 25 erfüllt, weil die Schutzkappe des in die USB-Schnittstelle gesteckten USB-Sticks entfernt werden muss.

Der vorliegenden Erfindung liegt die Aufgabe zugrunde, eine Systemeinheit der eingangs genannten Art mit einer verbesserten Schutzart im Hinblick auf einen Berührungs- und/oder Fremdkörper- und/oder Wasserschutz zu schaffen.

Diese Aufgabe wird dadurch gelöst, dass zwischen Abdeckung und Wand eine Dichtung vorgesehen ist.

Vorteilhaft ist, dass auch dann beispielsweise eine Schutzart IP 65 erzielt werden kann, falls ein gewöhnlicher USB-Stick eingesetzt wird, der nicht den Anforderungen gemäß einer IP-Schutzklasse genügt.

In einer weiteren Ausgestaltung der Erfindung ist vorgesehen, dass die USB-Schnittstelle schwenkbar gelagert ist, wodurch das Einstecken des USB-Sticks in die Schnittstelle vereinfacht wird. Um den Stick einzustecken, wird zunächst die Schnittstelle in eine Stellung im Wesentlichen senkrecht zur Wand ausgeschwenkt. Anschließend wird der gesteckte USB-Stick in eine Stellung im Wesentlichen parallel zur Wand geklappt und schließlich die Abdeckung geschlossen.

Eine weitere vorteilhafte Ausgestaltung der Erfindung ergibt sich aus dem weiteren Unteranspruch.

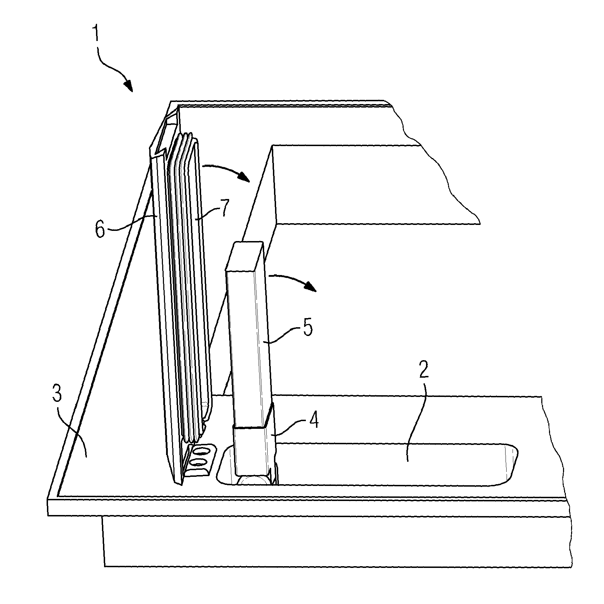

Die Erfindung wird nachfolgend anhand eines Ausführungsbeispiels unter Bezugnahme auf die einzige Figur der Zeichnung näher erläutert. Die Figur der Zeichnung zeigt in schematischer und vereinfachter Darstellung Teile einer Systemeinheit eines Rechners.

An eine Systemeinheit 1 eines Rechners sind hier nicht dargestellte Bedieneingabe-Einheiten, z. B. Bedieneingabe-Einheiten in Form einer Tastatur und/oder einer Maus, sowie mindestens eine Anzeigeeinheit und weitere Hardware-Einheiten anschließbar, wobei die Systemeinheit 1 ferner mit so genannten, ebenfalls hier nicht dargestellten PCI-Steckkarten versehen ist, die in Steckplätze eines Motherboards gesteckt sind. Diese Bestandteile sowie weitere Bestandteile der Systemeinheit 1, wie beispielsweise Disketten- oder Festplattenlaufwerke, Netzteil oder sonstige für den Betrieb des Rechners geeignete Hardwaremittel, sind für die Erfindung ohne Bedeutung und werden daher nicht erläutert.

In einer Vertiefung 2 einer Frontwand 3 der Systemeinheit 1 ist eine schwenkbar gelagerte USB-Schnittstelle 4 angeordnet, in welche ein USB-Stick 5, z. B. ein USB-Stick in Form eines USB-Speichers oder eines USB-Dongles, gesteckt ist. Die Vertiefung 2 ist durch eine schwenkbare Abdeckung bzw. Frontklappe 6 abdeckbar bzw. verschließbar, wobei die Abdeckung 6 mit einer Dichtung 7 versehen ist. Für den Fall, dass der USB-Stick 5 mittels der schwenkbaren USB-Schnittstelle 4 in eine Stellung im Wesentlichen parallel zur Wand 3 geschwenkt bzw. geklappt ist, kann die Abdeckung 6 geschlossen werden. Je nach Ausgestaltung der Dichtung bzw. Art der Dichtung ist dadurch der USB-Stick z. B. vor Strahlwasser geschützt, was bedeutet, dass die Anforderungen gemäß IP 65 erfüllt sind, wobei die Dichtung 7 zwischen der Vertiefung 2 und der geschlossenen Abdeckung 6 verhindert, dass Strahlwasser in die Vertiefung 2 eindringt.

## Patentansprüche

1. Systemeinheit für einen Rechner, welche an einer Wand (3) eine mittels einer Abdeckung (6) verschließbare Vertiefung (2) aufweist, in welcher mindestens eine USB-Schnittstelle (4) mit eingestecktem USB-Stick (5) angeordnet ist, **dadurch gekennzeichnet, dass** zwischen Abdeckung (6) und Wand (3) eine Dichtung (7) vorgesehen ist.

2. Systemeinheit nach Anspruch 1, **dadurch gekennzeichnet, dass** die USB-Schnittstelle (4) schwenkbar gelagert ist.

3. Systemeinheit nach Anspruch 1 oder 2, **dadurch gekennzeichnet, dass** die Dichtung (7) an der Abdeckung (6) angeordnet ist.
